(19)

Europäisches Patentamt
European Patent Office
Office européen des brevets

(11)  **EP 3 070 880 A1**

(12)  **EUROPEAN PATENT APPLICATION**

(43) Date of publication:
  **21.09.2016  Bulletin 2016/38**

(51) Int Cl.:
  **H04L 12/24** (2006.01)  **G01P 15/00** (2006.01)
  **H01Q 1/24** (2006.01)

(21) Application number: **16160844.3**

(22) Date of filing: **17.03.2016**

(84) Designated Contracting States:
  **AL AT BE BG CH CY CZ DE DK EE ES FI FR GB GR HR HU IE IS IT LI LT LU LV MC MK MT NL NO PL PT RO RS SE SI SK SM TR**
  Designated Extension States:
  **BA ME**
  Designated Validation States:
  **MA MD**

(30) Priority:  **20.03.2015  IT UB20150122**

(71) Applicant: **SIAE Microelettronica S.p.A.**
  **20093 Cologno Monzese (MI) (IT)**

(72) Inventors:
  • **MARINONI, Alberto**
    **20093 Cologno Monzese (MI) (IT)**
  • **AROSIO, Diego**
    **20093 Cologno Monzese (MI) (IT)**
  • **QUERO, Roberta**
    **20093 Cologno Monzese (MI) (IT)**

(74) Representative: **Raimondi, Margherita et al**
  **Dott. Ing. Prof. Alfredo Raimondi S.r.l.,**
  **Piazzale le Cadorna, 15**
  **20123 Milano (IT)**

(54)  **NETWORK ELEMENT SUITABLE FOR STRUCTURAL MONITORING AND PROCESS FOR EVALUATING THE STABILITY OF THE MEANS SUPPORTING SAID ELEMENT**

(57)  Outdoor network element for a radio link of a backhauling network, suitable for radio reception/transmission of signals via at least one antenna (1) connected to the network element,
the network element and the at least one antenna being adapted for mounting on a support structure (3),
the network element comprising a transceiver unit (1100;2100) which comprises
-) a unit (1105;2105) for processing and managing the network element, able to manage the different functional features of the element (1000) and the digital streams or signals intended for transmission and/or received via the at least one antenna (2) of the radio link;
which includes:
an internal accelerometer detection device (1200) connected to the processing and management unit and designed to detect variations in acceleration along three orthogonal axes (X,Y,Z),

*Fig.2*

**Description**

The present invention relates to a network element with internal accelerometer for a radio link of a backhauling network and a backhauling network comprising such a radio link and network element.

It is known, in the technical sector of telecommunications, and in particular radio links, for example of the microwave type, that a backhauling (or transport) network which transports information from an access network to a network backbone, is composed of various network elements (NE). Each network element is an apparatus which can be identified by means of a unique address within the network and is able to communicate with other network elements belonging to the same network.

In backhauling networks, a radio link between a source point and a destination point consists of at least one radio-transmitter apparatus and at least one radio-receiver apparatus, both forming network elements (NE) within the network and each connected to at least one respective transmitting/receiving antenna, with which they form transceiver assemblies that, if suitably arranged relative to each other, communicate with each other on a radio channel. An example of a radio transceiver apparatus is described in US 7,050,765.

A radio link is designed taking into account physical parameter and design specifications which influence the transmitting/receiving antennas and apparatus, and therefore the radio channel which is established between them, and is characterized by indicators of the quality of the radio link section; during installation, among other things, the relative "pointing direction" (i.e. orientation) of the transmitter and receiver antennas is verified; said pointing direction identifying the relative alignment between the main emission lobes of the antennas.

In order to monitor the quality (performance) of the links, each radio apparatus is generally provided with measurement points (at least one for each input/output interface of the apparatus) where, at predefined intervals, measurements relating to the operation of the single apparatus are performed, said measurements being stored in associated counters.

It is also known that network elements installed in a backhauling network are generally subject to monitoring, namely are configured and monitored by other network elements to which they are connected, such as a network monitoring system (NMS), namely a complex hardware and software system for management and control of the apparatus of the telecommunications network, with the main tasks of:

- providing them with the necessary operating parameters;
- collecting the data recorded at the measurement points of the single apparatus of the network and saved in the respective counters;
- storing the data, saving them inside an associated database;

- collecting alarms sent by the apparatus (signals of hardware faults of the single apparatus, malfunctions, etc.).

The network monitoring systems NMS communicate with the network elements, such as the transceiver apparatus, by means of a suitable protocol, for example SNMP (Simple Network Management Protocol), via which it is possible to: collect data in a specific manner by means of standard requests (SNMP get); set operating parameters of the receiver/transmitter apparatus (SNMP set); receive notifications (SNMP trap) from the said network elements.

It is also known that such external radio transceiver apparatus (referred to below also as ODU: Outdoor Unit) with associated antennas are generally installed, singly, or with other apparatus also of a different kind, on suitable support structures such as poles or pylons to which they are suitably fixed.

After the design and installation stage, it also important to perform continuous in-the-field monitoring of the radio links, both in terms of quality of the radio link itself, and in terms of stability of the structures housing the apparatus.

In this connection it happens that the structures (poles and/or pylons) which support the various transceiver apparatus are constantly stressed by both static and dynamic forces (e.g. wind, vibrations, snow, tremors) which, in the long run, may adversely affect, on the one hand, the pointing direction of the antenna - and therefore the transmission quality of the link - and, on the other hand, the structural integrity of the said support structures.

If not suitably monitored and compensated for by means of suitable counter-measures, these factors may result in an unacceptable deterioration in the quality of the link and, in the worst cases, collapse of the structure supporting the radio signal transmission and reception equipment.

According to the present state of the art, in order to prevent these situations from occurring, most service providers carry out periodic visual checks in situ of the support structures as a preventive maintenance; this solution, however, requires a huge outlay and specialized personnel and in any case depends on the capacity and experience of the operator.

WO 2015/031072 describes an auxiliary outdoor device for monitoring the orientation of an antenna, comprising a plurality of accelerometers able to detect variations in acceleration along three orthogonal axes, and a method for monitoring the orientation of an antenna which uses such a device. The device must be fixed directly onto the antenna and requires a dedicated power supply, circuitry and interfaces for saving and exporting the data detected, which is performed by means of a AISG UART type serial interface designed in accordance with a specific antenna standard, for connection to corresponding interfaces of an antenna.

The technical problem which is posed, therefore, is that of providing devices and processes suitable for monitoring the radio links from a structural point of view, in particular the stability of the means supporting the transceiver equipment, so as to be able to alleviate these difficulties of the prior art, such that it is possible to avoid at least partly the need for performing checks or monitoring in situ.

In connection with this problem, it is also required that the monitoring should be able to be performed without the installation of costly external auxiliary devices on the transceiver equipment.

These results are achieved according to the present invention by means of a network element according to Claim 1, and a telecommunications network according to Claim 7.

Further details may be obtained from the following description of nonlimiting examples of embodiment of the present invention, provided with reference to the accompanying drawings, in which:

Figure 1a: shows a schematic view of a telecommunications network with structures for supporting transceiver equipment for radio links in normal operating conditions;

Figure 1b: is a schematic view of a radio link installed on associated support structures, in operating conditions which are affected by the mechanical deformation of the structures supporting the equipment and the transceiver antennas;

Figure 2a: is a schematic illustration of a radio link with transceiver equipment for radio links according to the present invention installed on support structures;

Figure 2b: is a schematic view of an example of model representing a support structure according to Fig. 1 in a normal operating condition situated opposite a similar second structure which is mechanically deformed;

Figure 3: is a schematic circuit diagram of an embodiment of a network transceiver element according to the present invention with integrated accelerometer detection device;

Figure 4: is a block diagram of an example of a monitoring process which can be implemented with a network element according to the invention;

Figure 5: is an example of a graph representing a structural frequency response indicator;

Figure 6: shows schematic diagrams illustrating an example of the radiation pattern of an antenna and possible positions of the antenna, together with a graph showing the progression of the antenna gain upon variation in the angle of deviation β expressed in degrees from the perfect pointing direction;

Figures 7a,7b,7c: are diagrams illustrating a preferred arrangement of an accelerometer and a detail of the pitch and roll angles, respectively;

Figure 8: is a schematic diagram of a telecommunication network with radio links provided with transceiver equipment according to the invention connected to associated monitoring systems NMS;

Figure 9: is a block diagram of an example of implementation of a monitoring process which uses elements according to the invention;

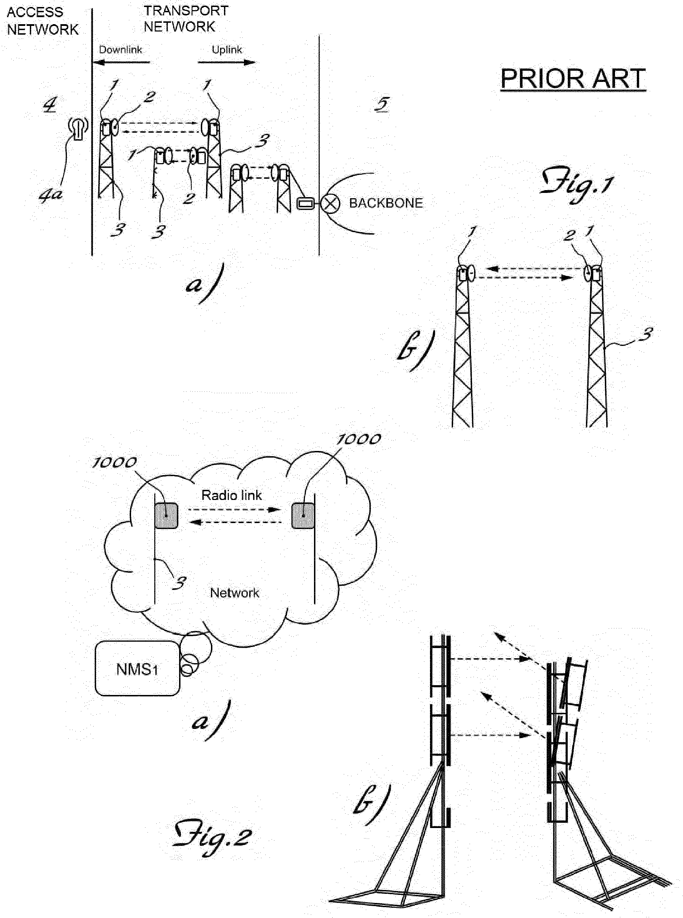

Fig. 1a shows a simplified diagram according to the prior art of a plurality of two-way radio links with respective transceiver units 1, connected to respective transceiver antennas 2 and mounted, single or multiple, on a respective support pylon 3, shown in a regular stable operating condition; the radio links are inserted, in a conventional manner, in a mobile backhauling network arranged between an access network 4, schematically shown with a cellular network station 4a, and network backbone 5.

Fig. 1b shows in schematic form a radio link in a defective condition caused by mechanical deformation of the support structures or pylons 3 which results in incorrect pointing of the antennas.

Fig. 2a shows in schematic form a radio relay link in which network elements according to the present invention consist of outdoor transceiver units 1000 for radio links, mounted on respective support pylons 3 and connected to a monitoring system NMS, while Fig. 2b shows a view of an example of a model representing support pylons 3 carrying a plurality of antennas fixed at different heights and connected to transceiver equipment; the connection shown in Fig. 2b is in a defective condition owing to the misalignment (incorrect pointing) of the antennas caused by a structural deformation of one of the two pylons.

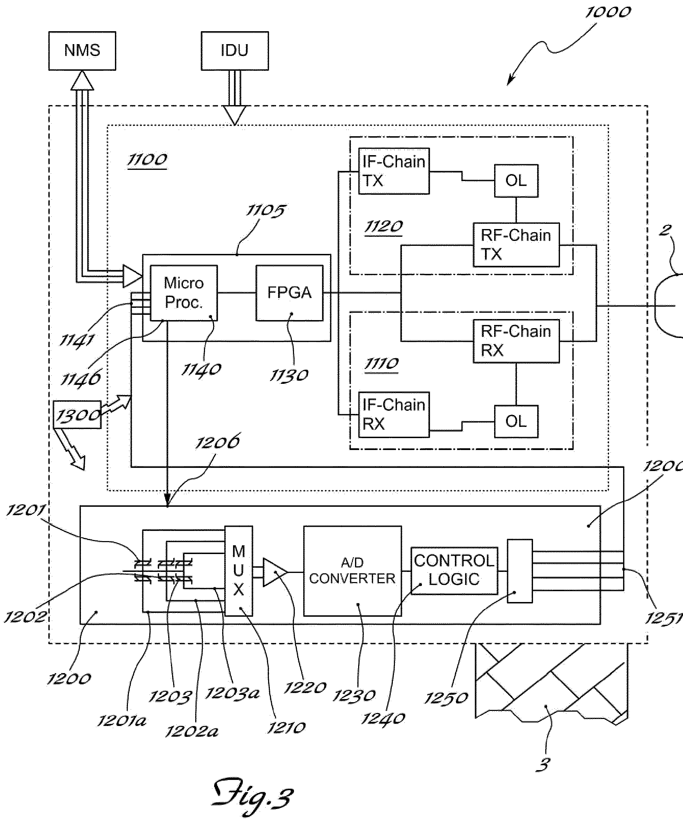

Fig. 3 shows an example of embodiment of a network element in the form of a transceiver unit according to the invention connected to an antenna 2 and mounted on a support pylon 3 only schematically shown in the figure (generally the transceiver unit is fixed to the antenna to which it is connected or to the support pylon).

According to the invention it is envisaged that the transceiver unit 1000, referred to below also as ODU (Outdoor Unit) comprises internally a transceiver unit 1100 connected to an accelerometer detection device 1200 (referred to below as accelerometer) designed to detect variations in acceleration along three orthogonal axes X, Y, Z, said variations being due for example to deformations or oscillations of the support pylon 3 caused by static or dynamic mechanical stresses.

In greater detail, the unit 1000 shown by way of example is an outdoor unit suitable for managing processing and transmission/reception at radiofrequency and intermediate frequency; the transceiver unit 1100 comprises:

-) a unit 1105 for processing and managing the ODU, able to manage the different functions of the unit 1000 and the reception/forwarding of digital streams or baseband signals supplied from/directed towards devices situated downstream/upstream, such as an indoor unit (IDU) for processing the baseband streams and intended for transmission/reception by means of the at least one transceiver antenna 2 of the ODU 1000.

In the example, the processing and management unit 1105 comprises a microprocessor 1140 connected to a programmable FPGA unit 1130, which implements different functions such as forwarding to the microprocessor of control/setting commands supplied by devices situated upstream (IDU) and, in the opposite direction, sending to downstream devices (IDU) of alarms and signals generated by the transceiver unit ODU; the processing and management unit is in turn connected via the FPGA 1130 to:

-)a chain 1110 for high-frequency conversion modulation of baseband signals intended for high-frequency transmission on the link via the at least on antenna 2;

- a chain 1120 for demodulation and conversion into baseband of high-frequency signals received via the at least one antenna 2.

As will become clearer below, the processing and management unit 1105 has at least one signal input connected to at least one signal output of the accelerometer 1200.

The processing unit 1140 receives at its input accelerometer detection data measured by the accelerometer device 1200 and transmitted on the at least one signal output of the accelerometer connected to the at least one signal input of the processing unit 1105.

In this way the network element may manage synergically the acceleration data by means of the unit 1140, for example using hardware, routines and protocols already at least partially provided for other performance data measured at the measurement points of the network element. Saving and/or processing and/or exporting of the structural monitoring data is therefore simplified.

Preferably, the radio transceiver unit 1000 is connected to a monitoring system NMS which communicates with the processing and management unit 1105 via suitable protocols (e.g. SNMP). The processing unit may also receive performance data detected at measurement points at the I/O interfaces of the transceiver unit; generally this data is saved briefly in the said unit and forwarded periodically in the form of suitable counters to the monitoring system NMS with which the unit 1000 is associated.

In greater detail, the accelerometer 1200 comprises sensor means for performing measurements along three orthogonal axes, i.e.:

-) sensor means 1201 for detecting and measuring the acceleration component $a_x$ on the X axis, occurring owing to the movement of the ODU, caused for example by deformation of the pylon 3 supporting the apparatus, and for emitting a corresponding positive or negative electric signal 1201a depending on the direction of the acceleration occurring;

-) sensor means 1202 for detecting and measuring the acceleration component $a_y$ on the Y axis, occurring owing to the movement of the ODU, caused for example by deformation of the pylon 3 supporting the apparatus, and for emitting a corresponding positive or negative electric signal 102a depending on the direction of the acceleration occurring;

-) sensor means 1203 for detecting and measuring the acceleration component $a_z$ on the Z axis, occurring owing to the movement of the ODU, caused for example by deformation of the pylon 3 supporting the apparatus, and for emitting a corresponding positive or negative electric signal 1203a depending on the direction of the acceleration occurring.

The signals 1201a, 1202a, 1203a emitted by the sensors are sent to the input of a multiplexer 1210, the output of which is linked to an amplifier 1220, the output of which is connected to the input of an A/D converter 1230, the output of which supplies the input of a CONTROL LOGIC 1240 which, via an I$^2$C/SPI standard serial interface 1250 with one or more signal outputs, connected to the inputs of the microprocessor, supplies accelerometer data to the said microprocessor.

The accelerometer detection device is a triaxial, linear, digital accelerometer, is integrated in the transceiver unit 1000 and is connected to the microprocessor 1140. The accelerometer performs sampling with a programmable sampling frequency, for example 1 KHz.

In the example of embodiment shown, the accelerometer belongs to the "nano" family of MEMS accelerometers. An equivalent or complementary option is that of using a similar triaxial gyroscope sensor.

Three buffers are present upstream of a signal output of the accelerometer device, these allowing temporary storage of the data before outputting them to the microprocessor 1140 of the processing and management unit 1105. Each buffer comprises memory elements, each containing the acceleration data measured on the three axes and read by the three corresponding registers of the accelerometer. The value of each buffer element is expressed as 12 bits with sign and the significance of the lsb (less significant bit) can be configured, as can the associated end-of-scale value.

The accelerometer can be programmed by means of suitable configuration input (pins) 1206 by means of which it is possible to vary various operating parameters such as the sampling frequency, the input detection dynamics, the measurement scale and the respective end-of-scale values, and also vary the settings relating to the signal inputs and outputs 1251 (serial frequency, clock frequency and other types).

The configuration inputs of the accelerometer are connected to corresponding signal outputs 1146 of the microprocessor 1140 of the processing and management unit 1105, by means of which it is possible to vary easily the operational settings of the accelerometer, as will emerge more clearly below.

The output signals 1251 of the data detected by the accelerometer are sent to corresponding inputs 1141 of the microprocessor 1140.

The processing unit 1105 receives therefore at its input accelerometer detection data measured along three orthogonal axes X, Y, Z by the accelerometer device 1200 and provided on the signal outputs of the accelerometer connected to the signal inputs of the processing unit 1105.

The outdoor unit ODU 1100 is connected to an associated network monitoring system NMS with which it communicates via an SNMP protocol.

According to a preferred aspect of the invention, the processing unit 1105 may be adapted to:

a) save the accelerometer detection data in counters, for subsequent processing; and/or
b) process the accelerometer detection data in order to monitor a transceiver assembly comprising the outdoor unit ODU 1000, the antenna(s) 2 and/or the support structure 3, monitoring being performed in relation to the variations in acceleration of the transceiver unit 1000 comprising the accelerometer 1200, providing also, as will emerge more clearly below, information regarding the quality of the link and/or the stresses acting on the support structure; and/or

A) making available the accelerometer detection data for exporting to an NMS of the network as such and/or in the form of counters; and/or
B) receiving, for example via an SNMP protocol, new configuration parameters, for example new accelerometer detection settings or new threshold values Ss,Sp for KPIs processes, described in greater detail below.

According to the preferred embodiments it is also envisaged that:

. the radio transceiver unit 1000 transmits/receives at radiofrequency, preferably microwave frequency;
. the accelerometer is integrated in the circuitry which houses the hardware components of the outdoor unit ODU;
. the accelerometer detection device is a triaxial, linear, digital accelerometer, preferably belonging to the "nano" family of accelerometers of the MEMS (Micro Electro-Mechanical Systems) type, which offer a high performance and low power consumption and synergic integration in the transceiver unit;
. the preferred accelerometer comprises at least one signal output transmitting the accelerometer detection data on a standard serial interface ($I^2C$/SPI). At least one buffer may be present upstream of the at least one signal output of the accelerometer device and is able to store temporarily the data before outputting it to the processing unit;
. the accelerometer is programmable by means of the signal inputs connected to corresponding outputs of the processing and management unit 1105. In particular it is preferably possible to configure the sampling frequency and/or the input detection dynamics and/or the measurement scale with associated end-of-scale values (e.g. $\pm$ 2g to 8g);
. where necessary, all the devices are connected to suitable power supply means 1300; preferably, the said power supply means are adapted to power also the accelerometer device so that additional power supply circuitry is not necessary, with savings in terms of space, hardware components and therefore costs.

According to a preferred embodiment, the processing unit 1105 is programmed to process the acceleration data supplied by the accelerometer 1200 in order to process:

- at least one structural behaviour indicator KPIs for the integral assembly of ODU 1000, structure 3 supporting the ODU and associated antenna(s) 2; and/or
- at least one pointing indicator KPIp for analysing the orientation of the radiation diagram of the at least one antenna integral with the transceiver unit ODU.

Preferably, processing by the microprocessor 1140 of the processing and management unit 1105 is performed by means of a process for monitoring the transceiver assembly comprising the ODU 1000, associated antenna(s) 2 and support structure 3 depending on variations in acceleration affecting the transceiver unit 1000 comprising the accelerometer 1200.

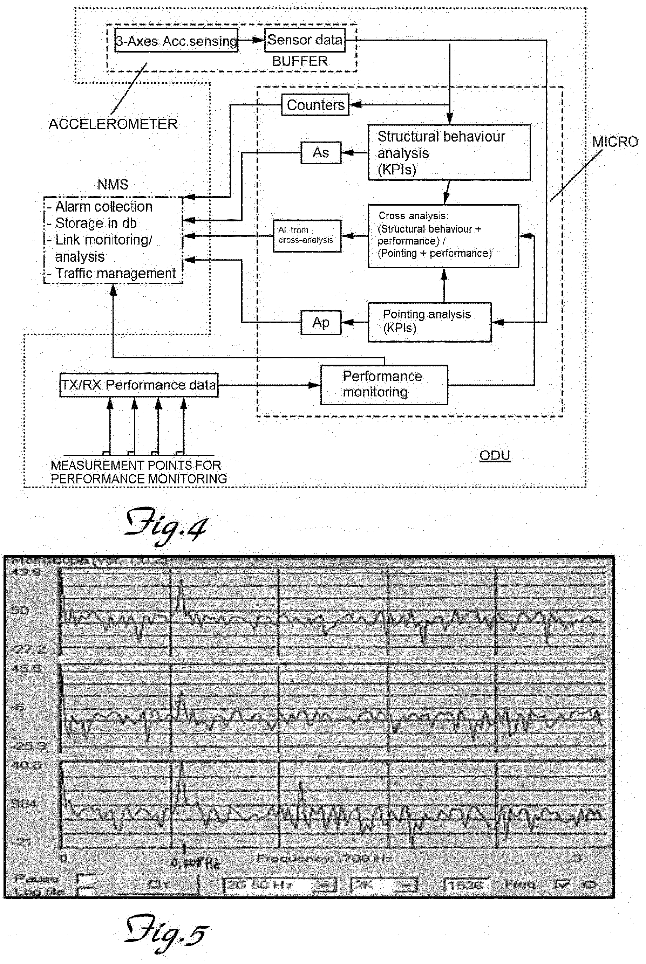

With reference to Fig. 4 the said monitoring process according to the present invention comprises at least the following steps:

-)Processing at least one structural behaviour indicator KPIs for the integral assembly of transceiver ODU, structure supporting the unit and associated antenna(s), processed on the basis of the data emitted by the accelerometer integrated in the ODU integral with the structure;
- verifying, in accordance with an evaluation rule, the compliance of the at least one KPIs indicator processed with predefined standards; and/or
-) processing at least one indicator KPIp representing the pointing of the transceiver antenna(s) integral with the radio transceiver apparatus and processed on the basis of the data emitted by the accelerometer integrated in the ODU connected to the at least one antenna;
-) verifying, in accordance with an evaluation rule, the compliance of the at least one KPIp processed with predefined standards;

-) generating a respective alarm signal As and/or Ap if at least one of the indicators KPIs and KPIp is not compliant.

In greater detail, according to a preferred embodiment, the step of processing at least one indicator KPIs envisages the steps of:

--) defining the at least one indicator KPIs depending on data emitted by the accelerometer integrated in the ODU fixed to the support structure;

--) calculating at preferably regular intervals the at least one indicator KPIs on the basis of the data emitted by the accelerometer integrated in the ODU fixed to the support structure.

Similarly, according to a preferred embodiment, the step of processing at least one indicator KPIp envisages the steps of:

--) defining the at least one indicator KPIp depending on the data emitted by the accelerometer integrated in the ODU connected to the at least one antenna;

--) calculating at preferably regular intervals the at least one KPIp on the basis of the data emitted by the accelerometer integrated in the ODU connected to the at least one antenna.

Preferably, the step of evaluating the compliance of the at least one indicator KPIs or the at least one indicator KPIp processed is performed by means of the following substeps:

--) defining at least one respective threshold value Ss,Sp for the indicator KPIs,KPp, assumed as limit value of compliance of the KPI with the predefined standards;

--) defining at least one rule for comparison between the indicator KPIs,KPIp and the respective threshold value Ss,Sp, for evaluating the compliance of the KPI processed with the predefined standards;

--) evaluating the compliance of the indicator KPIs,KPIp processed by means of comparison with the threshold defined Ss,Sp, in accordance with the at least one comparison rule defined.

According to a first example of embodiment, the at least one structural behaviour indicator KPIs comprises an indicator representing a frequency response of the assembly comprising structure supporting the transceiver unit ODU, the unit itself and associated antennas, processed on the basis of the data emitted by the accelerometer integrated in the outdoor unit ODU fixed to the structure.

An example of implementation of the process steps relating to the definition and calculation of such a structural behaviour indicator KPIs comprises the substeps of:

- acquiring at preferably regular intervals acceleration samples by means of the accelerometer device integrated in the unit;
- preferably, filtering the samples acquired with a low-pass filter in order to eliminate the background noise which is naturally present;
- calculating the Fourier transform on the N samples acquired in the time period T in order to detect the oscillation frequencies of the structure.

Preferably there is a further preliminary step of:

- identifying typical oscillation frequencies of the structure, for example by means of a preliminary set of measurements;

a preferred step of verifying the compliance of the indicator KPIs thus calculated may comprise a:

- comparison of the oscillation frequencies defined with the typical oscillation frequencies calculated during the preliminary set of measurements carried out.

According to a preferred embodiment the indicator KPIs is therefore defined and calculated as a Fourier Transform $A_K$ of the samples of acceleration detected along the three detection axes of the accelerometer.

In the application illustrated herein it is preferred to calculate the Fast Fourier Transform (FFT) on 512 samples for each of the three axes x, y and z.

The spectrum of the signal obtained is therefore a set of N=512 lines which are periodically repeated at each interval Fs, where Fs is the sampling frequency of the accelerometer.

Using the acceleration data detected by the unit ODU it is possible to evaluate the oscillations thereof which occur together with the oscillations of the support structure on which the outdoor unit ODU and the antennas are mounted. Variations in the vibration level of the structure are converted into displacements of the oscillation frequency thereof, which may be detected and analyzed thanks to the detection data of the accelerometer device integrated in the transceiver unit ODU and compared with the typical oscillation frequencies of the structure supporting the ODU or of the assembly structure comprising the ODU and antennas.

Figure 5 shows an example of calculation of an indicator KPIs as described above. The first graph shows the FTT of the samples acquired along the axis X of the accelerometer; the second graph shows the corresponding samples of the axis Y, while the third graph shows the axis Z. The x axis of all the graphs is expressed in Hz, while the y axis of all the graphs is expressed in dB. The three graphs in the figure show that a structure subject to a given stress in the three directions produces a well-defined and repeatable spectral line represented in the example by a peak at a frequency of 0.708 Hz, representing the oscillation frequency associated with or typical of the structure.

By being able to obtain indicative values as to the actual oscillation of the antennas as well as the degree of oscillation affecting the support structure and determine the variations in oscillation with respect to the typical frequencies thereof - said indicative values being calculated not on hypothetical statistical wind values, but on the actual operating conditions and stresses acting on the structures - it is possible to monitor in an innovative manner the support structures and ensure greater efficiency of the network elements such as the transceiver apparatus with respective antennas, the radio links and in general the backhauling telecommunication networks.

The ODU may be adapted to forward to an NMS also the historical series of samples acquired within the time period T and the relative spectrum in the frequency domain calculated via FFT.

It is therefore clear how acquisition of the acceleration samples of the network element allows an analysis of the peaks of the oscillation frequencies of the structure, making it possible to detect the presence of structural defects which cause a reduction in the rigidity of the structure which results in a reduction in the resonance frequencies thereof and an increase in the intensity of the accelerations detected by the accelerometer. A significant structural alarm indicator may relate for example to a deterioration over time of the oscillation frequencies of the structure, this indicating an increase in the probability of cracks in the structure. On the basis of the time evolution of the spectral peaks, an operator may therefore evaluate the opportuneness of carrying out a check in the field. By adopting such an approach it is possible to monitor remotely in a simultaneous and continuous manner over time a vast network of network elements and associated support structures and carry out checks in situ only where there is an indication of a real structural anomaly.

According to a preferred embodiment, the pointing indicator KPIp is defined as the angular deviation of the direction of maximum gain (or maximum directivity) of the antenna(s) from a predefined perfect pointing direction.

The process steps for defining and calculating the antenna pointing indicator KPIp may comprise the substeps of:

- calibrating a reference point, preferably the point of origin, of the accelerometer reference system, in accordance with a perfect pointing position (pointing direction towards the antenna rx = direction of maximum gain).

- calculating the angular deviation $\beta$ of the direction of maximum gain from the perfect pointing direction; said calculation being performed by means of measurements of the angular variation processed on the basis of the acceleration data detected by the accelerometer and transmitted to the processing unit.

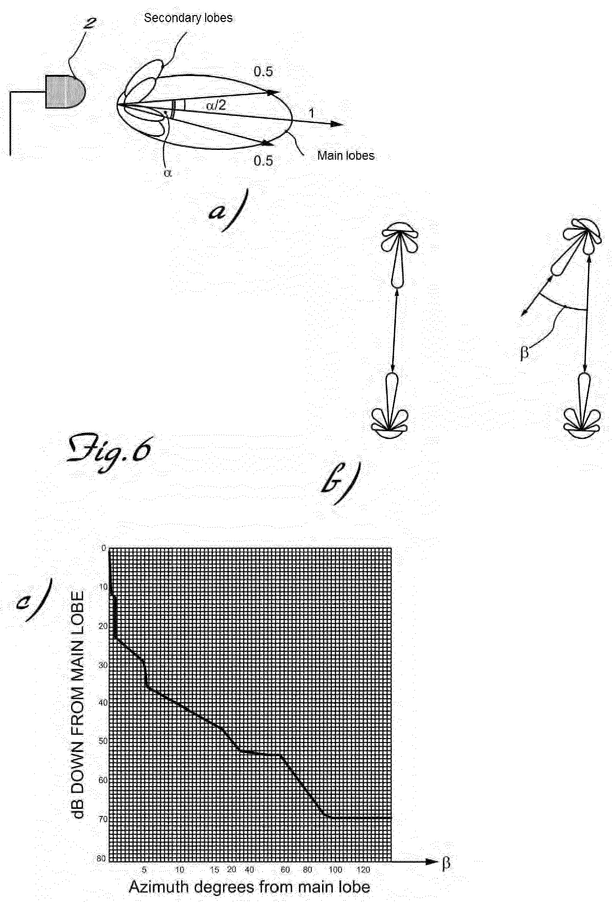

With reference to Figure 6 and considering a direction of irradiation of a real antenna, the gain in that direction is defined as being the ratio between the density of energy emitted by the real antenna and that irradiated by a hypothetical isotropic antenna (which irradiates uniformly in all the directions) in the same direction, subject to the condition that both densities are calculated at the same distance from the respective antennas.

Moreover, the aperture angle $\alpha$ (Fig. 6) is defined as being the angle formed by the two vectors of the radiation diagram which have a modulus of 0.5, namely that the gain in the direction indicated by each vector is half the maximum gain, represented by the vector with modulus 1 which indicates the direction of maximum gain.

A loss of -3dB compared to the maximum gain (halving) corresponds to these two relative gains, so that the angle $\alpha$ is referred to as an opening at -3dB or azimuth.

Since practically all the energy irradiated or received by the antenna is enclosed within the angular region defined by the opening at -3dB, as a result the smaller the angle $\alpha$, the greater the directivity of the antenna and therefore its gain in the direction of maximum directivity.

In order to obtain perfect pointing of a transceiver antenna towards the corresponding antenna on the opposite side of the link it is therefore necessary to align the direction of maximum gain (or maximum directivity) of the antenna, and therefore the main irradiation lobe thereof, with the corresponding main lobe of the opposite transceiver antenna (Fig. 6b).

This operation is generally carried out during installation of the link and in this condition the antenna is, for the purposes of description of the present invention, defined as being in the perfect pointing position.

The deviation of said direction of maximum gain from the perfect pointing direction is indicated by $\beta$ (Fig. 6b).

Fig. 6c shows the deterioration of the antenna gain with an increase in the angle $\beta$.

If a reference point, and preferably the origin, of the reference system of the accelerometer is set to the perfect pointing position of the antenna(s) connected to the ODU, as calculated during the design stage or set during installation of the link section, with the accelerometer integrated in the ODU according to the invention it is possible to measure the displacement of the antenna(s) from the perfect pointing position by measuring the acceleration affecting the ODU along the three axes X,Y,Z and obtaining from the acceleration data measured the angles of rotation of the combined ODU and antenna structure.

An example of a preferred threshold value Sp for the generation of an alarm Ap by the processing and management unit of the ODU is a deviation $\beta$ from the perfect pointing direction equal to an angle $\alpha/2$.

For example, for 60cm-80Ghz antennas, the aperture angle at -3dB is equal to 0.5°, and therefore the angle $\alpha/2 = 0.25°$ may be regarded as the threshold value Sp.

The processing of a pointing indicator KPIp may therefore comprise the steps of:

- calculating at preferably regular intervals the indicator KPIp defined as being the angular deviation $\beta$ of the direction of maximum directivity of the antenna(s) from a predefined perfect pointing direction;
- comparing the calculated angular deviation $\beta$ with the threshold value Sp defined by the user.

According to a preferred example of embodiment, the step of calibrating a reference point of the reference system of the accelerometer is performed as follows:

- installing the outdoor unit ODU so that an axis of the accelerometer, in this example the axis Z, is substantially aligned with the direction of gravitational acceleration;
- calibrating pointing of the antennas, arranging them in a perfect pointing position;
- calibrating the point of origin of the reference system of the accelerometer in accordance with the perfect pointing position of the antennas.

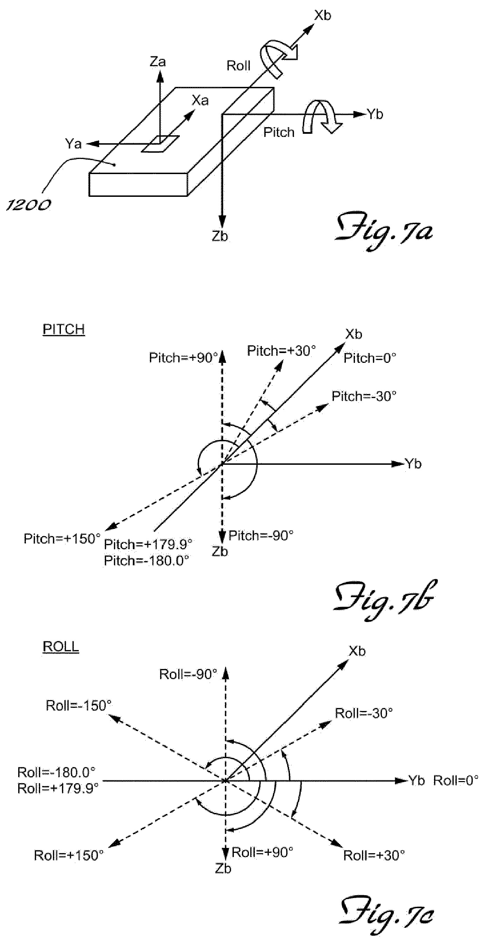

With this configuration and with reference to the orientation of the axes shown in Figure 7a, the accelerations measured along the three axes of the accelerometer are indicated by $a_x, a_y$ and $a_z$. Xa, Ya, Za indicate the reference axes of the accelerometer, while Xb, Yb, Zb indicate the reference axes of the rigid body. Using these agreed references the angular deviation in three-dimensional space with respect to the perfect pointing direction may be measured by calculating a roll (rotational) angle $\beta$ with respect to the horizontal plane X-Y. The roll angle (Fig. 7c) is defined as the angle between $Y_b$ and the horizontal plane X-Y and is calculated as follows:

$$roll = \arctan\left(\frac{a_y}{\sqrt{a_x^2 + a_z^2}}\right)$$

Preferably, with reference to Figures 7a,7b,7c and the agreed references described to illustrate the roll angle, the evaluation of the angular variations may also comprise the measurement of a pitch angle, defined as the angle between $X_b$ and the horizontal plane X-Y and calculated as follows:

$$pitch = \arctan\left(\frac{a_x}{\sqrt{a_y^2 + a_z^2}}\right)$$

With this preferred solution the deviation with respect to the perfect pointing direction of the antenna(s) may be easily monitored by measuring the angular variation, thereby making it easy to define a deterioration in the performance of the link associated with a displacement of the antennas. In the field of mobile telephone service providers, a threshold equal to an angular variation of 30' is generally considered to be valid.

It is understood that it is within the competence of a person skilled in the art to be able to calculate the angular deviation based on the accelerometer detection data using other calculation methods and other orientations of the accelerometer without departing from the teachings of the present invention.

According to a further example of embodiment, which may be implemented as an alternative to or in combination with the example of a structural indicator KPIs which comprises an indicator representing a frequency response, the at least one structural behaviour indicator KPIs comprises a mechanical/structural stability indicator for a mechanical/structural analysis of the assembly comprising ODU, ODU support structure and antenna(s). The mechanical/structural indicator KPIs may indicate the angles of rotation of the structure assembly which are processed based on measurements of rotation of the network element about one or more axes of the accelerometer obtained from the acceleration data detected.

The monitoring of the angles of rotation of the ODU, and therefore of the support structure, and in particular the pitch and roll angles, therefore provides useful information about the displacements affecting the support structure of the transceiver ODU, in particular displacements due to both environmental factors, for example the wind, and structural factors, such as gradual failure of the structure, faulty welds, etc.

The processing unit may also receive performance data detected at measurement points at the I/O interfaces of the transceiver apparatus; generally this data is saved for a short period of time in the said unit and forwarded periodically to the monitoring system NMS with which the apparatus is associated.

Preferably, if the radio network element 1000 is connected to a network monitoring system NMS, the process comprises the further step of:

-) sending to a network monitoring system NMS the at least one alarm signal Ap, As generated.

Preferably, sending of the at least one alarm signal Ap,As generated to the network monitoring system NMS is performed by means of a notification sent by the radio transceiver unit 1000 to the network monitoring system NMS, the notification being preferably sent via the standard protocol or communication between the unit 1000 and the NMS, preferably via a SNMP notification (SNMP trap); in this way, for the structural monitoring/pointing alarms, it is not necessary to implement additional monitoring protocols and channels between the transceiver apparatus and the respective NMS, but connections and protocols already provided between the network elements and the associated monitoring systems are used.

In addition all thresholds and parameters may be varied by the user by means of the NMS and the processing unit.

With the described combination of network elements the operating principle of the outdoor unit ODU according to the invention is as follows:

- the transceiver unit 2000 and the associated antennas 2 are installed on the support structure 3, suitably connecting them together and preferably with an axis of the accelerometer aligned with the direction of the gravity acceleration vector;
- pointing of the antennas is set with the direction of maximum directivity aligned with the perfect pointing direction;
- by means of the processing and management unit 1105 the accelerometer is calibrated so that its reference system is suitably calibrated, preferably with the origin of the axes centred on the predefined perfect pointing position of the antennas, and the further suitable values of the operating parameters of the accelerometer device are also set;
- the unit 1000 is connected to the respective NMS; by means of the protocol for communication between NMS and unit 1000 it is possible in any moment to send new operating parameters of the accelerometer to the unit 1000 which, via the microprocessor 1140 and the respective signal outputs connected to the input pins of the accelerometer, may suitably vary the settings of the said accelerometer;
- the respective threshold values (Ss,Sp) for the indicators KPIs and KPIp are sent via the communication protocol between NMS and unit 1000, said value being set (1140) as limit value for compliance of the indicator KPI with the predefined standards;
- the operations of reception/transmission and accelerometric detection of the ODU are initiated;
- the processing and management unit 1140 receives the detection data of the accelerometer and:

-- saves them in suitable counters;
-- calculates at regular intervals - suitably preprogrammed and able to be varied by means of corresponding instructions sent by the NMS - the structural stability indicators KPIs,KPIf and pointing indicator KPIp,
-- compares the values calculated with the set respective thresholds Ss,Sp using the evaluation rules programmed in the microprocessor 1140;

- if one or more of the KPIs calculated do/does not comply with the respective evaluation rules programmed in the microprocessor 1140, the latter generates an associated alarm signal As,Ap which is forwarded immediately to the NMS via the communication protocol in use;
- upon request of the NMS, for example via a request on an SNMP protocol, the counters in which the accelerometer data is stored are exported from the processing unit 2150 to the NMS.

NMS ADAPTED TO MONITOR THE LINK(S)

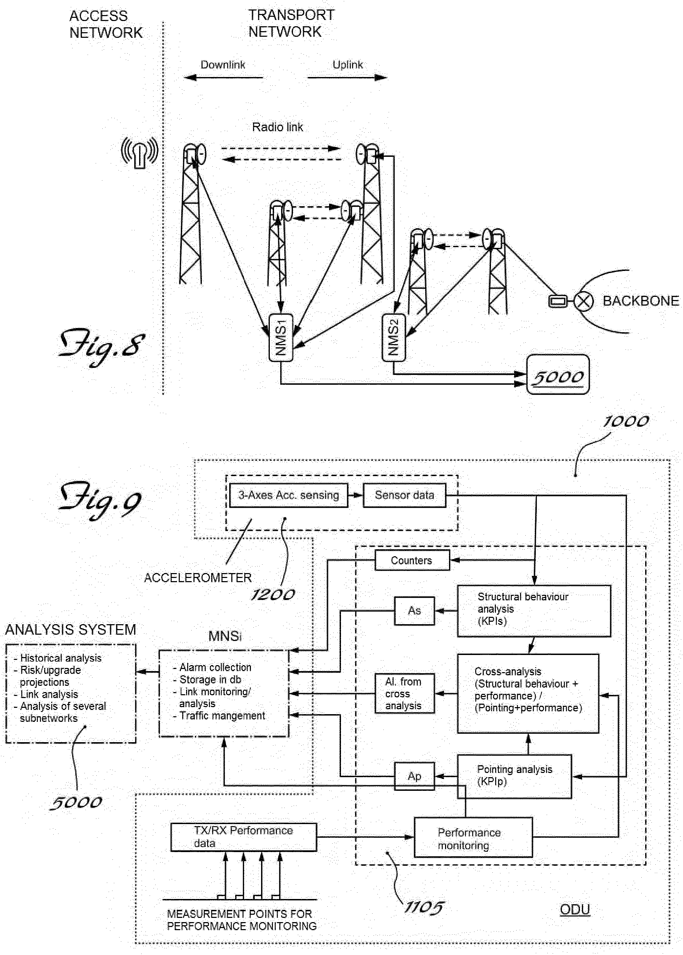

With reference to the diagram in Figures 8 this shows an example of a telecommunications network with transceiver units 1 according to the invention mounted on pylons 3 and associated transceiver antennas 2 connected thereto. Each ODU is connected to a respective monitoring system NMS1,NMS2 which, according to one aspect of the invention, is designed to receive and/request from the transceiver units the accelerometer data detected by the respective accelerometers and/or the respective summary counters for implementing processes for monitoring one or more network elements or the radio links associated with them. For example the NMS may implement a monitoring process such as that described in connection with the outdoor unit ODU.

METHOD OF MONITORING RADIO LINKS VIA THE NMS

According to a further aspect of the invention, via the monitoring systems NMS, it is possible to carry out a cross-analysis of the accelerometer data of one or more units ODU belonging to a radio link with the statistics of the performance counters of the same unit or other units belonging to the link. In particular, an evaluation of correlation between the data supplied by at least one accelerometer and the following standard performance monitoring counters is preferably performed:

. PM G.828, which provide information about the errors in the TDM (Time Division Multiplexing) frames and, consequently, about deterioration of the signal;
. PM ACM, which detect automatic changes in the modulation;
. PM X/RX, which allow the powers transmitted and received to be monitored, optionally comparing them with suitable threshold values set by the user, and an alarm to be sent if the threshold is exceeded.

NETWORK ANALYSIS SYSTEM CONNECTED TO ONE OR MORE NMS

With reference to Figs. 8 and 9 the monitoring systems NMS1, NMS2 may be further connected to an additional analysis system 5000.

It is envisaged in fact that with an analysis system connected downstream of one or more NMS according to the invention it is possible to implement methods for analysis of a telecommunication network comprising radio links with network elements according to the invention by carrying out a cross-analysis of the data supplied by the accelerometer detection device(s) (in the form of counters or fully downloaded from the ODUs) and the data relating to the performance statistics (performance counters), for example the preferred counters mentioned above. This allows one to carry out a precise analysis of the critical situations identified in the network and the single links, so to obtain a correct diagnosis of possible anomalies, for example checking whether a deterioration in the performance of a radio link was due to a deviation from the perfect pointing position of one or more antennas connected to the ODUs belonging to the link.

It is therefore clear how, with the network element and the monitoring process according to the invention, it is possible to obtain significant data relating to the structural stability of the mechanical support of the said unit, said objective data being able to be viewed by the remote operator without having to carry out periodic visual checks in situ of the support structures, such that the check is no longer dependent on the greater or lesser skill of the operator and a significant reduction in the maintenance costs of the transmission systems is achieved.

It is also clear how, as result of the combination of a transceiver unit with integrated accelerometer and associated NMS, the following may be achieved:

- continuous monitoring over time of the radio links;
- high speed signalling of structural faults and/or pointing anomalies of the transceiver assemblies installed on support structures (the information as to faults/anomalies is sent in real time from the ODU to the NMS on the associated telecommunication protocol);
- integrated detection of vibration anomalies (all the components needed for analysis of the radio unit are in the same unit);
- high degree of versatility owing to the possibility of configuring the monitoring and detection parameters (for example the acquisition frequency of the accelerometer data) by means of the processing and management unit of the ODU which may be reprogrammed or may receive updated parameters via the respective monitoring system NMS with which it communicates;
- tracing and storage of the detection data and monitoring documentation (the monitoring system NMS according to the invention is able to store the data acquired so that it is always available to the client for subsequent analysis and processing, for example using the analysis method described hereinbelow).

The monitoring described may be easily performed without the installation of costly auxiliary devices external to the transceiver apparatus. By means of the aforementioned integration of an accelerometer in the network element such as a transceiver ODU, preferably in combination with an NMS, it is possible to monitor in an effective and innovative manner the quality of the radio links and the structures housing them and further monitoring parameters and methods may be developed within such an infrastructure depending on the control requirements.

Although described in connection with a number of preferred embodiments, in particular having an architecture composed of an indoor unit (IDU) for processing baseband digital streams connected by cable to an outdoor RF transmission unit, it is understood that the scope of protection of the present patent is not limited thereto and may for example be applied also to full outdoor apparatus without affecting the general nature of the combination of detection accelerometer and processing and management unit and/or the associated monitoring systems and methods; the scope of protection is understood as being determined solely by the attached claims.

In addition to the above the following embodiments are explicitly included in the present description:

1) Process for monitoring a transceiver assembly of a radio link of a backhauling network, the assembly comprising:

- a network element;
- at least one antenna (2) connected to the network element;
- a support structure (3) on which the network element and the at least one antenna connected thereto are fixed;

wherein the network element comprises:

--) a transceiver unit (1100;2100) with a unit (1105;2105) for processing and managing the network element, able to manage the different functional features of the element (1000) and the digital streams or signals intended for transmission and/or received via the at least one antenna (2) of the radio link;
-) an internal accelerometer detection device (1200) connected to the processing and management unit and designed to detect variations in acceleration along three orthogonal axes (X,Y,Z), the accelerometer device (1200) having at least one signal output (1251) for accelerometer detection data, connected to at least one signal input (1141) of the processing and management unit (1105);

the process comprising the steps of:

    -) processing at least one structural behaviour indicator KPIs of the assembly on the basis of the data emitted by the accelerometer included in the network element;

    -) verifying, in accordance with a respective evaluation rule, the compliance with predefined standards of the at least one indicator KPIs processed; and/or

    -) processing of at least one pointing indicator KPIp of the antenna(s), on the basis of the data emitted by the accelerometer included in the network element;

    -) verifying, in accordance with a respective evaluation rule, the compliance with predefined standards of the at least one indicator KPIp processed; and/or a further step of

    -) generating a respective alarm signal (Af;Ap) for each indicator KPIs and KPIp which does not comply.

2) Process according to the preceding embodiment, characterized in that the step of processing one or more of the indicators KPIs;KPIp envisages the steps of:

    --) defining the indicator KPIs;KPIp as a function of data emitted by the accelerometer;

    --) calculating at - preferably regular - intervals the indicator KPIs;KPIp on the basis of the data emitted by the accelerometer.

3) Process according to either one of embodiments 1 and 2, wherein the step of evaluation of the compliance of the at least one indicator KPIs or at least one indicator KPIp processed is carried in accordance with the following substeps:

    --) defining at least one respective threshold value Ss,Sp, assumed as limit value for compliance of the respective indicator KPIs,KPIp with the predefined standards;

    --) defining at least one rule for comparison between the indicator KPIf,KPIp and the respective threshold value Sf,Sp for evaluation of the compliance of the KPI processed with the predefined standards;

    --) verifying the compliance of the indicator KPIf,KPIp processed by means of a comparison with the at least one respective threshold defined Ss,Sp, in accordance with the at least one comparison rule defined.

4) Process according to any one of embodiments 1 to 3, wherein the at least one structural behaviour indicator KPIs comprises an indicator of a frequency response of the transceiver assembly, processed on the basis of the data emitted by the accelerometer integrated in the network element fixed to the support structure.

5) Process according to the preceding embodiment, wherein processing of said indicator of a frequency response of the transceiver assembly comprises the calculation of a Fourier transform of acceleration data along at least one of the three detection axes of the accelerometer.

6) Process according to any one of embodiments 1 to 5, wherein the processing of the at least one pointing indicator KPIp comprises a calculation of an angular deviation ($\beta$) of the direction of maximum gain of the antenna(s) from a predefined perfect pointing direction.

7) Process according to the preceding embodiment, wherein the steps of defining and calculating the antenna pointing indicator KPIp comprise the substeps of:

-    calibrating a reference point, preferably the point of origin, of the reference system of the accelerometer in accordance with a perfect pointing position of the antenna(s);

-    calculating the angular deviation ($\beta$) of the direction of maximum gain from the perfect pointing direction by means of angular shift measurements processed on the basis of the acceleration data detected by the accelerometer.

8) Process according to the preceding embodiment, wherein the step of calibrating a reference point of the reference system of the accelerometer comprises the steps of:

-    installing the network element so that an axis of the accelerometer is substantially aligned with the direction of gravitational acceleration;

-    calibrating pointing of the antenna(s) in a perfect pointing position;

-    calibrating the point of origin of the reference system of the accelerometer in accordance with the perfect pointing position of the antenna(s).

9) Process according to the preceding embodiment, wherein the angle of deviation is calculated as the angle of rotation about one of the two axes of the accelerometer not aligned with the direction of gravitational acceleration.

10) Process according to any one of embodiments 1 to 9, characterized in that the at least one structural behaviour indicator KPIs comprises an indicator of the mechanical/structural stability of the transceiver assembly.

11) Process according to the preceding embodiment, wherein said mechanical/structural stability indicator is an indicator of the angles of rotation of the transceiver assembly processed from measurements of rotation of the network element about one or more axes of the accelerometer, obtained from the acceleration data detected.

12) Process according to any one of embodiments 1 to 11, characterized in that it is implemented by the processing and management unit of the network element.

13) Process according to the preceding embodiment, characterized in that it comprises a further step of:

-) sending at least one alarm signal (Af,Ap) generated to a network monitoring system NMS of the radio link, which is connected to and in communication with the processing and management unit of the network element.

14) Process according to the preceding embodiment, wherein sending of the at least one alarm signal (As,Ap) generated to the monitoring system NMS is performed by means of sending of a notification by the network element to the monitoring system NMS, the notification being sent by means of a standard communication protocol between the network element and the NMS, preferably by means of a SNMP notification (SNMP trap).

15) Process according to any one of embodiments 13 to 15, wherein a threshold value (Ss;Sp) and/or a detection configuration of the accelerometer is varied by a monitoring system, by sending a corresponding instruction to the network element by means of a standard communication protocol between the network element and the NMS, preferably via an SNMP instruction (SNMP set).

16) Process according to any one of embodiments 1 to 11, characterized in that it is implemented by a monitoring system NMS connected to the network element, on the basis of data exported from the network element to the monitoring system, the system being for this purpose adapted to receive and/or request from the at least one network element accelerometer detection data detected by the accelerometer of the network element and/or respective counters summarising the accelerometer detection data;
and the processing and management unit being adapted to export the accelerometer detection data, as such and/or in the form of summary counters, to the network monitoring system NMS to which it is connected and with which it communicates via a communication protocol.

17) Process according to the preceding embodiment, characterized in that the monitoring system is connected to one or more network elements belonging to the radio link and in that it is adapted to carry out a cross-analysis of the accelerometer data detected by one or more of the network elements and of statistics of performance counters of the said element and/or of at least one other element belonging to the link.

18) Process according to the preceding embodiment, wherein in said cross-analysis step an evaluation is carried out as to a correlation between the detection data from the at least one accelerometer and the data of one or more performance monitoring counters belonging to the following types:

. Counters which provide information about the errors in the TDM (Time Division Multiplexing) frames;
. Counters (PM ACM) which detect automatic changes in the modulation;
. Counters (PM TX/RX) for monitoring the power transmitted and/or received.

19) Monitoring system (NMS1,NMS2) of a backhauling network comprising at least one network element provided with an accelerometer according to any one of embodiments described in the present description or in the accompanying claims, the monitoring system being adapted to receive and/or request from the at least network element accelerometer detection data detected by an accelerometer of the network element and/or respective counters summarising the accelerometer detection data, and/or at least one alarm (As;Ap) generated by the at least one unit as a function of accelerometer detection data.

20) Monitoring system according to the preceding embodiment, characterized in that it is connected to one or more network elements belonging to a radio link of a backhauling network and in that it is adapted to carry out a cross-analysis of the accelerometer data detected by one or more of the network elements and of statistics of performance counters of the said element and/or of at least one other element belonging to the link.

21) Method for monitoring at least one radio link of a backhauling network, the link comprising at least one network element provided with an accelerometer according to any one of the embodiments described in the present description or in the attached claims, comprising a step of cross-analysis of the accelerometer data detected by the accelerometer device of at least one network element belonging to the radio link with statistics of at least one performance counter of the network element or other elements belonging to the link.

22) Method according to the preceding embodiment, wherein during said cross-analysis step an evaluation is carried out as to a correlation between the detection data from the at least one accelerometer and the data of one or more performance monitoring counters belonging to the following types:

• Counters which provide information about the errors in the TDM (Time Division Multiplexing) frames;

- Counters (PM ACM) which detect automatic changes in the modulation;
- Counters (PM TX/RX) for monitoring the power transmitted and/or received.

**Claims**

1. Outdoor network element for a radio link of a backhauling network, suitable for radio reception/transmission of signals via at least one antenna (1) to which the outdoor network element is integral during use, the outdoor network element being adapted, during use, for mounting on a support structure (3), the outdoor network element comprising a transceiver unit (1100;2100) which comprises

   -) a unit (1105;2105) for processing and managing the network element, able to manage the different functional features of the outdoor network element (1000) and the digital streams or signals intended for transmission and/or received via the at least one antenna (2) of the radio link;

   **characterized in that** it includes:

   an internal accelerometer detection device (1200) connected to the processing and management unit and adapted to detect variations in acceleration along three orthogonal axes (X,Y,Z),
   and **in that** the accelerometer device (1200) has at least one signal output (1251) for carrying accelerometer detection data, connected to at least one signal input (1141) of the processing and management unit (1105).

2. Network element according to Claims 1, **characterized in that** the accelerometer (1200) is a triaxial, linear, digital accelerometer belonging to the nano family of MEMS accelerometers and/or **in that** it is integrated in the circuitry which houses the hardware components of the network element.

3. Network element according to any one of the preceding claims, **characterized in that** the accelerometer can be configured by means of at least one signal input of the accelerometer connected to a corresponding at least one signal output of the processing and management unit, whereby preferably the sampling frequency and/or the input detection dynamics and/or the measurement scale with associated end-of-scale values and/or the origin of the reference system of the accelerometer may be configured.

4. Network element according to any one of the preceding claims, **characterized in that** the processing and management unit (1105) saves the accelerometer detection data in counters.

5. Network element according to any one of the preceding claims, **characterized in that** the processing and management unit (1105) is adapted to export the accelerometer detection data, as such and/or in the form of counters, to a network monitoring system NMS to which it is connected during use and with which it communicates via a communication protocol.

6. Network element according to any one of the preceding claims, **characterized in that** the processing and management unit (1105) is adapted to process the data relating to the detected acceleration supplied by the accelerometer (1200) to provide:

   - at least one indicator KPIs of a structural behaviour of an assembly comprising the network element, the structure carrying the element and the associated antenna(s);
   and/or
   - at least one indicator KPIp of the pointing of at least one antenna integral with the network element.

7. Backhauling telecommunication network comprising at least one radio link with a network element according to any one of Claims 1 to 6.

8. Telecommunication network according to any one of the preceding claims, comprising at least one network monitoring system NMS connected to the at least one network element, wherein the processing and management unit (1105) of the at least one network element is connected to the NMS, wherein the processing and management unit (1105) communicates with the NMS via a communication protocol and wherein the processing and management unit (1105) is adapted to export the accelerometer detection data to the NMS as such and/or in the form of counters.

9. Telecommunication network according to Claim 8, wherein the NMS is adapted to monitor the radio link by carrying out a cross-analysis of the accelerometer data detected by the accelerometer device of at least one network element belonging to the radio link with statistics of at least one performance counter of the said network element and/or of other network elements belonging to the link.

10. Telecommunication network according to the preceding claim, wherein said statistics of at least one performance counter of the said network element and/or of other network elements belonging to the link comprise the data of one or more performance monitoring counters belonging to the following types:

. Counters which provide information about errors in TDM (Time Division Multiplexing) frames;
. Counters (PM ACM) which detect automatic changes in the modulation;
. Counters (PM TX/RX) for monitoring the power transmitted and/or received.

**11.** Telecommunication network according to any one of Claims 8-10, wherein the network element is an element according to Claim 6 and wherein it is adapted to:

-) verify the compliance of a processed indicator KIPs,KPIp by means of comparison with at least one respective predefined threshold Ss,Sp, in accordance with at least one predefined comparison rule;
-) generate and send at least one alarm signal (As,Ap) to the Monitoring System NMS, for a non-compliant KPIs,KPIp;

wherein sending of the at least one alarm signal (As,Ap) generated to the monitoring system NMS is performed by means of sending of a notification by the network element to the monitoring system NMS, the notification being sent via the standard communication protocol between the network element and the NMS, preferably by means of an SNMP notification (SNMP trap).

**12.** Telecommunication network according to the preceding claim, wherein a threshold value (Ss;Sp) is varied by the monitoring system, by sending a corresponding instruction via the standard communication protocol between the network element and the NMS, preferably by means of an SNMP instruction (SNMP set).

**13.** Telecommunication network according to any one of Claims 8-10, wherein the NMS is designed to process the acceleration data detected supplied by the accelerometer (1200) and provide:

- at least one indicator KPIs of a structural behaviour of an assembly comprising the network element, the structure carrying the element and the associated antenna(s);
and/or
- at least one indicator KPIp of the pointing of at least one antenna integral with the network element ODU.

**14.** Telecommunication network according to any one of Claims 8-13, wherein the network element is implemented in accordance with Claim 3 and wherein the monitoring system is adapted to configure the accelerometer of the network element by sending a corresponding instruction to the network element via the standard communication protocol between the network element and the NMS, preferably by means of an SNMP instruction (SNMP set).

**PRIOR ART**

*Fig.1*

a)

b)

*Fig.2*

a)

b)

Radio link

Network

NMS1

Fig.3

*Fig.4*

*Fig.5*

Fig.6

*Fig.7a*

*Fig.7b*

*Fig.7c*

ACCESS
NETWORK

TRANSPORT
NETWORK

Downlink ← → Uplink

Radio link

BACKBONE

NMS1

NMS2

5000

*Fig.8*

*Fig.9*

1000

3-Axes Acc. sensing → Sensor data

ACCELEROMETER

1200

Counters

As

Structural behaviour
analysis
(KPIs)

ANALYSIS SYSTEM

- Historical analysis
- Risk/upgrade
  projections
- Link analysis
- Analysis of several
  subnetworks

MNSi

- Alarm collection
- Storage in db
- Link monitoring/
  analysis
- Traffic mangement

Al. from
cross
analysis

Cross-analysis
(Structural behaviour +
performance) /
(Pointing+performance)

5000

Ap

Pointing analysis
(KPIp)

TX/RX Performance
data

Performance
monitoring

1105

ODU

MEASUREMENT POINTS FOR
PERFORMANCE MONITORING

Europäisches
Patentamt

European
Patent Office

Office européen
des brevets

# EUROPEAN SEARCH REPORT

Application Number

EP 16 16 0844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 7 050 765 B2 (AMMAR DANNY F [US] ET AL) 23 May 2006 (2006-05-23) * column 1, line 5 - column 17, line 26; figures 2,3,12 * | 1-14 | INV. H04L12/24 G01P15/00 H01Q1/24 |
| Y,D | WO 2015/031072 A1 (ANDREW LLC [US]) 5 March 2015 (2015-03-05) * paragraph [0002] - paragraph [0049]; figure 3 * | 1-14 | |
| A | US 2011/199274 A1 (DALMAZZO ENZO [US]) 18 August 2011 (2011-08-18) * paragraph [0002] - paragraph [0037]; figures 1-4 * | 1-14 | |
| A | 3z Telecom: "Antenna Monitoring Sensor", , 23 February 2015 (2015-02-23), XP055232664, Retrieved from the Internet: URL:http://www.precision-marketing.com/wp-content/uploads/3Z_Antenna_WASP_Brochure.pdf [retrieved on 2015-12-01] * the whole document * | 1-14 | TECHNICAL FIELDS SEARCHED (IPC) H04L G01P H01Q |
| A | WO 2009/097282 A1 (KMW U S A INC [US]; JUNG HYUN [US]; KIM DUK-YONG [KR]; KIM YEUNG [US]) 6 August 2009 (2009-08-06) * paragraph [0030] - paragraph [0057]; figures 1,2a,2e-2j,3-6 * | 5,8-14 | |

-/--

The present search report has been drawn up for all claims

| Place of search | Date of completion of the search | Examiner |
|---|---|---|
| Munich | 14 July 2016 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 16 16 0844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Automated Network Monitoring of Trango Microwave Equipment using SNMP", <br><br> , <br> 17 September 2012 (2012-09-17), <br> XP055232698, <br> Poway, CA <br> Retrieved from the Internet: <br> URL:http://www.trangosys.com/sites/default/files/support/documents/infobase/pdfs/AN-SNMP-PRTG.pdf <br> [retrieved on 2015-12-01] <br> * the whole document * <br> ----- | 11,12,14 | |

TECHNICAL FIELDS
SEARCHED (IPC)

The present search report has been drawn up for all claims

| Place of search | Date of completion of the search | Examiner |
|---|---|---|
| Munich | 14 July 2016 | Lupia, Sergio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 0844

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2016

| Patent document cited in search report | | Publication date | Patent family member(s) | | Publication date |
|---|---|---|---|---|---|
| US 7050765 | B2 | 23-05-2006 | AU | 2003303719 A1 | 10-08-2004 |
| | | | CN | 1735999 A | 15-02-2006 |
| | | | EP | 1581982 A1 | 05-10-2005 |
| | | | JP | 2006513637 A | 20-04-2006 |
| | | | KR | 20050092400 A | 21-09-2005 |
| | | | US | 2004203528 A1 | 14-10-2004 |
| | | | WO | 2004064197 A1 | 29-07-2004 |
| WO 2015031072 | A1 | 05-03-2015 | EP | 2883272 A1 | 17-06-2015 |
| | | | US | 2016020504 A1 | 21-01-2016 |
| | | | WO | 2015031072 A1 | 05-03-2015 |
| US 2011199274 | A1 | 18-08-2011 | CA | 2834547 A1 | 22-11-2012 |
| | | | CN | 103748901 A | 23-04-2014 |
| | | | EP | 2702773 A1 | 05-03-2014 |
| | | | HK | 1197334 A1 | 09-01-2015 |
| | | | US | 2011199274 A1 | 18-08-2011 |
| | | | WO | 2012158329 A1 | 22-11-2012 |
| WO 2009097282 | A1 | 06-08-2009 | NONE | | |

EPO FORM P0459

For more details about this annex : see Official Journal of the European Patent Office, No. 12/82

**EP 3 070 880 A1**

REFERENCES CITED IN THE DESCRIPTION

**Patent documents cited in the description**

- US 7050765 B
- WO 2015031072 A